# EUROPEAN PATENT SPECIFICATION

(11) **EP 2 397 744 B1**
(45) Date of publication and mention of the grant of the patent: **18.03.2015**
(21) Application number: 11170051.4
(22) Date of filing: 15.06.2011
(51) Int. Cl.: F16N 7/00

(54) **Turbo machine**
Turbomaschine
Moteur avec turbocompresseur

(30) Priority: 17.06.2010 JP 2010138358
(43) Date of publication of application: 21.12.2011
(73) Proprietor: IHI Corporation, Tokyo 135-8710 (JP)
(72) Inventor: Takahashi, Toshio, Tokyo (JP); Wakisaka, Hirohisa, Tokyo (JP)
(74) Representative: Lamb, Martin John Carstairs

(56) References cited:
- EP-A1- 0 434 911
- EP-A2- 0 342 515
- EP-A2- 1 921 322
- DE-A1- 2 412 584
- JP-A- 6 216 437

## Description

### Field of the Invention

The present invention relates to a turbo machine.

Priority is claimed on Japanese Patent Application No. 2010-138358, filed June 17, 2010.

### Description of Related Art

In the related art, a turbo machine such as a turbo blower which makes gas flow has been used. The above-described turbo machine includes an impeller (a rotary vane) that rotates to make gas flow, a motor or the like (a driving device) that rotationally drives the impeller, and a rotary shaft that transmits a rotational driving force of the motor to the impeller. The impeller, the motor and the rotary shaft are housed in a casing which forms the outline of the turbo machine. The rotary shaft is rotatably supported via a bearing (for example, a rolling bearing) installed in the casing.

In order to maintain smooth rotation of the rotary shaft, lubricant oil is supplied to the bearing. In addition, as described in Japanese Patent Application, First Publication No. H6-216437, "grease lubrication" in which grease is supplied to the bearing is used due to the fact that a tank for storing lubricant oil can be small and the labor of the maintenance can be reduced, or the like.

Grease is a lubricant agent which becomes a semi-solid by dispersing a thickening material in lubricant oil serving as an oil base. As the method of the grease lubrication, for example, there is a method in which a grease supply device is installed in the turbo machine and grease is supplied at regular time intervals.

Generally, the bearing and the grease supply device are connected by a supply tube for supplying the grease.

However, in a case where the supply tube is provided to supply grease to the bearing, an operation for disposing and connecting the supply tube is needed at the time of manufacture or maintenance of the turbo machine, and there is a possibility that the labor involved in the assembly of the turbo machine will be increased.

Reference is made to JP6-216437, which discloses a turbo machine according to the preamble of claim 1.

### SUMMARY OF THE INVENTION

The present invention is made in consideration of the above-described circumstances, and an object of the present invention is to provide a turbo machine capable of reducing assembly labor at the time of manufacture or maintenance of the turbo machine.

According to an aspect of the present invention, there is provided a turbo machine including: an impeller that rotates to make gas flow; a driving device that rotationally drives the impeller; a rotary shaft that transmits a rotational driving force of the driving device to the impeller; a bearing that rotatably supports the rotary shaft; and a casing that houses at least the driving device and the rotary shaft. In addition, the casing is provided with a grease flow path to supply grease to the bearing for lubricating the bearing.

At the time of manufacture or maintenance of the turbo machine, an assembly operation is performed for assembling the impeller, the driving device, the rotary shaft, the bearing, the casing, or the like. At this time, when a supply tube, or the like for supplying grease to the bearing is used in the casing of the turbo machine, an operation for disposing and connecting the supply tube is needed, and there is a possibility that the labor involved in the assembly of the turbo machine will be increased. However, according to the present invention, the grease flow path for supplying grease to the bearing is formed in the casing. Therefore, in the assembly operation of the turbo machine, a predetermined amount of grease is filled in the grease flow path formed in the casing, the rotary shaft or the bearing, and the like is sequentially installed to the casing, and the assembly operation of the turbo machine is completed. That is, an operation for disposing and connecting the supply tube, which is needed in the related art, is not necessary.

The casing includes a casing body that houses at least the driving device and the rotary shaft, and a bearing supporting member that is detachably installed in the casing body and supports the bearing. Further, the casing body is provided with a first flow path that forms a portion of the grease flow path, and the bearing supporting member is provided with a second flow path that forms a portion of the grease flow path and communicates with the first flow path.

In this case, a direction in which the first flow path and the second flow path communicate with each other may be the same as a direction in which the bearing supporting member is attached and detached.

In this case, the bearing supporting member may be provided with a circular flow path that is circularly disposed around the rotational axis of the rotary shaft, and the circular flow path may form a portion of the second flow path and be disposed so as to communicate with the first flow path.

In this case, the bearing supporting member may include a grease storing portion for storing grease which is discharged from the bearing.

According to the present invention, in the assembly operation of the turbo machine, an operation for disposing and connecting the supply tube in the casing is not necessary. Therefore, according to the present invention, assembly labor can be reduced at the time of manufacture or maintenance of the turbo machine.

### BRIEF DESCRIPTION OF THE DRAWINGS

FIG. 1 is a cross-section view showing a schematic configuration of the turbo blower according to a first embodiment of the present invention.
FIG. 2 is an exploded cross-section view showing a schematic configuration of the turbo blower according to the first embodiment of the present invention.
FIG. 3 is an enlarged cross-section view showing the module in FIG. 2.
FIG. 4 is a cross-section view taken along the line A-A of FIG. 3.
FIG. 5 is a view as viewed from the arrow B of FIG. 3.
FIG. 6A is a plan view showing the grease receiving saucer according to the first embodiment of the present invention.
FIG. 6B is a cross-section view taken along the line C-C of FIG. 6A.
FIG. 7 is a cross-section view showing a schematic configuration of the turbo blower according to a second embodiment of the present invention.

### DETAILED DESCRIPTION OF THE INVENTION

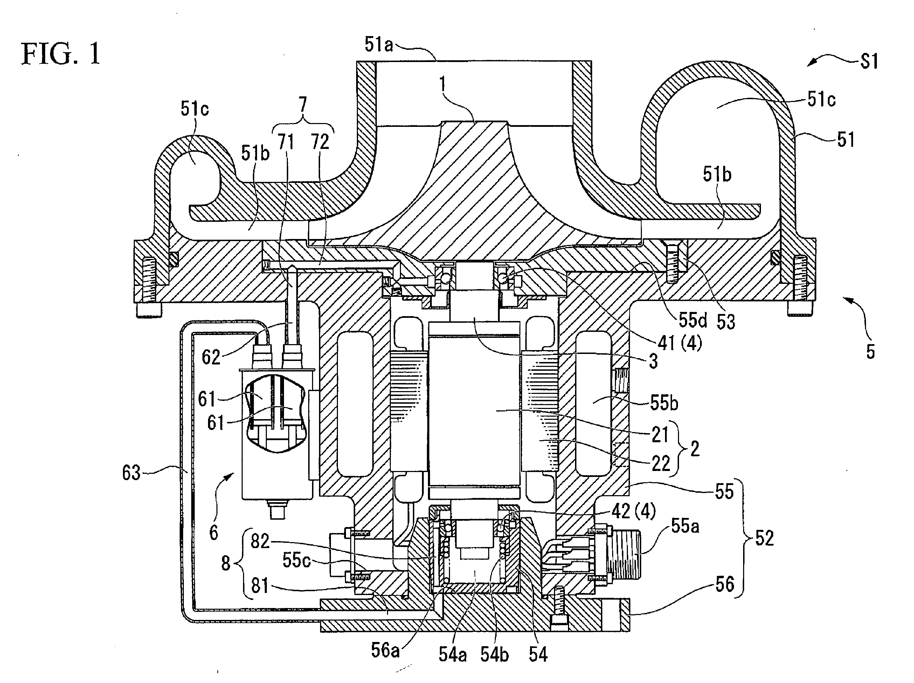

Hereinafter, embodiments of the present invention will be described with reference to FIGS. 1 to 7. In addition, scales in drawings of the description below are appropriately changed so as to enlarge the respective members for identification.

### [First Embodiment]

FIG. 1 is a cross-section view showing a schematic configuration of a turbo blower S1 according to this embodiment.
The turbo blower S1 is a turbo machine which compresses gas introduced from the outside and makes the gas flow. For example, the turbo blower S1 is used in a gas laser apparatus (a carbon dioxide laser apparatus or the like). The turbo blower S1 which is used in the gas laser apparatus is employed so as to make laser gas which is a medium of gas laser flow toward a laser oscillator.
The turbo blower S1 includes an impeller 1, a motor 2 (a driving device), a rotary shaft 3, a bearing 4, a casing 5 and a grease supply device 6. In addition, in FIGS. 1 to 3, the direction of an axis of the rotary shaft 3 is given as the vertical direction, and the side on which the impeller 1 is provided is given as the upper side. -

The impeller 1 is a rotary vane which rotates to make gas flow. Moreover, when the impeller 1 is rotated, the impeller 1 suctions gas from the one side in the direction of the rotational axis of the impeller 1, and discharges the suctioned gas to the outside in the radial direction.

The motor 2 is a driving device for generating a driving force so as to rotate the impeller 1. In this embodiment, the motor 2 is an induction motor, and includes a rotor 21 that has a core (an iron core) formed as a cage-form, and a stator 22 that has a winding wire which is provided to enclose the rotor 21. When power is supplied to the stator 22, the rotor 21 is rotated. That is, when power is supplied, the stator 22 provides a rotational driving force to the rotor 21. Moreover, the motor 2 may be a motor other than the induction motor. Further, a driving device other than the motor may be used.

The rotary shaft 3 is a shaft member for transmitting the rotational driving force of the motor 2 to the impeller 1. The rotary shaft 3 is provided so as to extend in the vertical direction. In addition, the rotary shaft 3 is fixed to the rotor 21 so as to pass through the rotor 21. Further, the impeller 1 is fixed to the upper end portion of the rotary shaft 3. As a method in which the rotary shaft 3 and the impeller 1 are fixed to each other, fastening by using a fastening member or welding is exemplified.

The bearing 4 rotatably supports the rotary shaft 3. The bearing 4 is installed in the casing 5. That is, the rotary shaft 3 is rotatably supported by the casing 5 via the bearing 4. The bearing 4 is a rolling bearing, and more specifically, is an angular contact ball bearing. Further, the bearing 4 is not limited to the angular contact ball bearing, and may be any bearing, such as a deep-groove ball bearing or a tapered roller bearing, which can support both a radial load and a thrust load. In this embodiment, an upper bearing 41 (a bearing) and a lower bearing 42 (a bearing) are used as the bearing 4. The upper bearing 41 supports the upper end portion of the rotary shaft 3, that is, the end portion of the impeller 1 side. The lower bearing 42 supports the lower end portion of the rotary shaft 3, that is, the end portion of the side which is opposite to the impeller 1. In this embodiment, grease is supplied to the upper bearing 41 and the lower bearing 42. The grease maintains smooth rotation of the upper bearing 41 and the lower bearing 42.

The casing 5 forms the outline of the turbo blower S1, and houses the impeller 1, the motor 2 and the rotary shaft 3. The casing 5 includes a scroll casing 51, a casing body 52, an upper bearing supporting member 53 (a bearing supporting member), and a lower bearing supporting member 54 (a bearing supporting member).

The scroll casing 51 is provided to enclose the impeller 1. In the scroll casing 51, an intake 51a, a diffuser 51b and a scroll chamber 51c are formed.
In the intake 51a, gas is introduced toward the impeller 1. The diffuser 51b is circularly formed so as to enclose the impeller 1, and is a flow path in which gas discharged by the impeller 1 rotating is introduced. Gas introduced in the diffuser 51b is compressed, and its pressure is increased. The scroll chamber 51c is circularly formed so as to enclose the impeller 1, and is a flow path which is provided to communicate with the diffuser 51b. In the scroll chamber 51c, a discharge opening (not shown) is provided. The gas discharged by the impeller 1 rotating is supplied to the outside of the casing 5 from the discharge opening via the diffuser 51b and the scroll chamber 51 c.

The casing body 52 houses the motor 2 and the rotary shaft 3. The casing body 52 includes a motor casing 55 and a base plate 56.

The motor casing 55 houses the motor 2. The above-described scroll casing 51 is detachably connected to the motor casing 55 by using a fastening bolt, or the like. In the motor casing 55, a connector 55a, a water-cooling jacket 55b and a suction opening 55c are formed. The stator 22 is fixed to the motor casing 55.

The connector 55a is employed for connecting a power cable (not shown) so as to supply power to the motor 2. Further, the connector 55a and the stator 22 are electrically connected to each other by a wire. In addition, when the turbo blower S1 is used in the gas laser apparatus, or the like, since it is necessary to form the casing 5 as a sealed structure, a hermetic connector is employed as the connector 55a so as to seal the connecting portion with the power cable.
The water-cooling jacket 55b cools the motor 2. The water-cooling jacket 55b is provided to enclose the motor 2 around the rotational axis of the rotary shaft 3.
The suction opening 55c is an opening which is formed so as to penetrate the motor casing 55. A suction device (not shown) for suctioning an internal space in which the motor 2 is installed is connected to the suction opening 55c. Through the suction of the suctioning device, gas flow is generated from the scroll casing 51 toward the motor casing 55 via the upper bearing 41. Therefore, it is possible to prevent lubricant oil supplied to the upper bearing 41 or the like from flowing into the scroll casing 51 due to volatilization of the lubricant oil.

The base plate 56 is fixed to the lower portion of the motor casing 55 by using a fastening bolt or the like, and is employed as a base portion of the turbo blower S1. In addition, in this embodiment, the motor casing 55 and the base plate 56 are configured as a separate member, but the present invention is not limited thereto. That is, the casing body 52 may be formed in one body.

The upper bearing supporting member 53 supports the upper bearing 41. The upper bearing supporting member 53 is detachably installed in the motor casing 55 of the casing body 52 by using the fastening bolt, or the like. That is, the upper bearing 41 is installed in the upper bearing supporting member 53. In addition, the upper bearing supporting member 53 is installed in a recess 55d formed in the motor casing 55.
The upper bearing supporting member 53 is provided between a place in which the impeller 1 in the scroll casing 51 is installed and a place in which the motor 2 in the motor casing 55 is installed. The upper bearing supporting member 53 is a member which is formed as a disk-shape. The direction in which the upper bearing supporting member 53 is attached to and detached from the motor casing 55 is the same as the vertical direction. The rotary shaft 3 passes through a center portion of the upper bearing supporting member 53 so as to form a gap between the rotary shaft 3 and the center portion, and the upper bearing 41 is also installed in the center portion of the upper bearing supporting member 53.

The lower bearing supporting member 54 supports the lower bearing 42. The lower bearing supporting member 54 is detachably installed in the base plate 56 of the casing body 52. That is, the lower bearing 42 is installed in the lower bearing supporting member 54. Further, the lower bearing supporting member 54 is installed in a recess 56a which is formed in the base plate 56.
The lower bearing supporting member 54 is a member which is formed as a cylindrical shape having a base, and a space 54a (a grease storing portion) is formed in the inside of the lower bearing supporting member 54. The lower end portion of the rotary shaft 3 is inserted in and provided at the space 54a via an upper opening of the lower bearing supporting member 54. In addition, the lower bearing 42 is installed in the vicinity of the upper opening of the lower bearing supporting member 54. Further, the space 54a becomes a storing portion in which the grease discharged from the lower bearing 42 is stored. The direction in which the lower bearing supporting member 54 is attached to and detached from the base plate 56 is the same as the vertical direction.

A pre-compression spring 54b, which biases the lower bearing 42 toward the upside, is provided at the space 54a of the lower bearing supporting member 54. In addition, the lower bearing 42 is connected to the upper bearing 41 via the rotary shaft 3. Therefore, the biasing force toward the upside of the pre-compression spring 54b is transmitted to not only the lower bearing 42 but also the upper bearing 41, and the biasing force (that is, pre-load) of the vertical direction is applied to the upper bearing 41 and the lower bearing 42. Since the upper bearing 41 and the lower bearing 42 are angular contact ball bearings and the pre-load is appropriately applied to the vertical direction, a rolling element (a ball) is supported at an appropriate position, and vibration or noise, and the like generated by the rotation is reduced.

The casing 5 is provided with an upper grease flow path 7 (a grease flow path) to supply to the upper bearing 41, and a lower grease flow path 8 (a grease flow path) to supply to the lower bearing 42.

The upper grease flow path 7 includes a first upper flow path 71 (a first flow path) and a second upper flow path 72 (a second flow path).
The first upper flow path 71 is formed in the member which composes the motor casing 55 of the casing body 52.
The end portion of one side of the first upper flow path 71 is opened toward the outside of the motor casing 55, and the end portion of the other side of the first upper flow path 71 is opened in the recess 55d.
The second upper flow path 72 is formed in the member which composes the upper bearing supporting member 53. The end portion of one side of the second upper flow path 72 is opened toward the recess 55d of the motor casing 55, and the end portion of the other side of the second upper flow path 72 is connected to the upper bearing 41. In addition, the end portion of the one side of the second upper flow path 72 is provided at a position in which the second upper flow path 72 directly communicates with the first upper flow path 71.
That is, since the first upper path flow 71 and the second upper path flow 72 are formed, the grease supplied from the outside can be supplied to the upper bearing 41.

The lower grease flow path 8 includes a first lower flow path 81 (a first flow path) and a second lower flow path 82 (a second flow path).
The first lower flow path 81 is formed in the member which composes the base plate 56 of the casing body 52. The end portion of one side of the first lower flow path 81 is opened toward the outside of the base plate 56, and the end portion of the other side of the first lower flow path 81 is opened in the recess 56a.
The second lower flow path 82 is formed in the member which composes the lower bearing supporting member 54. The end portion of one side of the second lower flow path 82 is opened toward the recess 56a of the base plate 56, and the end portion of the other side of the second lower flow path 82 is connected to the lower bearing 42. In addition, the end portion of the one side of the second lower flow path 82 is provided at a position in which the second lower flow path 82 directly communicates with the first lower flow path 81.
That is, since the first lower flow path 81 and the second lower flow path 82 are formed, the grease supplied from the outside can be supplied to the lower bearing 42.

The grease supply device 6 is installed in the outside of the casing 5, and supplies grease to the upper bearing 41 and the lower bearing 42. A pair of syringes 61 filled with grease is housed in the inside of the grease supply device 6. Further, a driving device (not shown) for driving the syringes 61 is provided at the inside of the grease supply device 6. The syringes 61 are driven by operating the driving device, and the grease in the syringes 61 can be supplied.

A first supply tube 62 and a second supply tube 63 are each connected to the pair of syringes 61. One syringe 61 and the first upper flow path 71 of the motor casing 55 are connected to each other by the first supply tube 62. In addition, the other syringe 61 and the first lower flow path 81 of the base plate 56 are connected to each other by the second supply tube 63. That is, through operation of the grease supply device 6, it is possible to supply grease to the upper bearing 41 and the lower bearing 42 in the turbo blower S1.

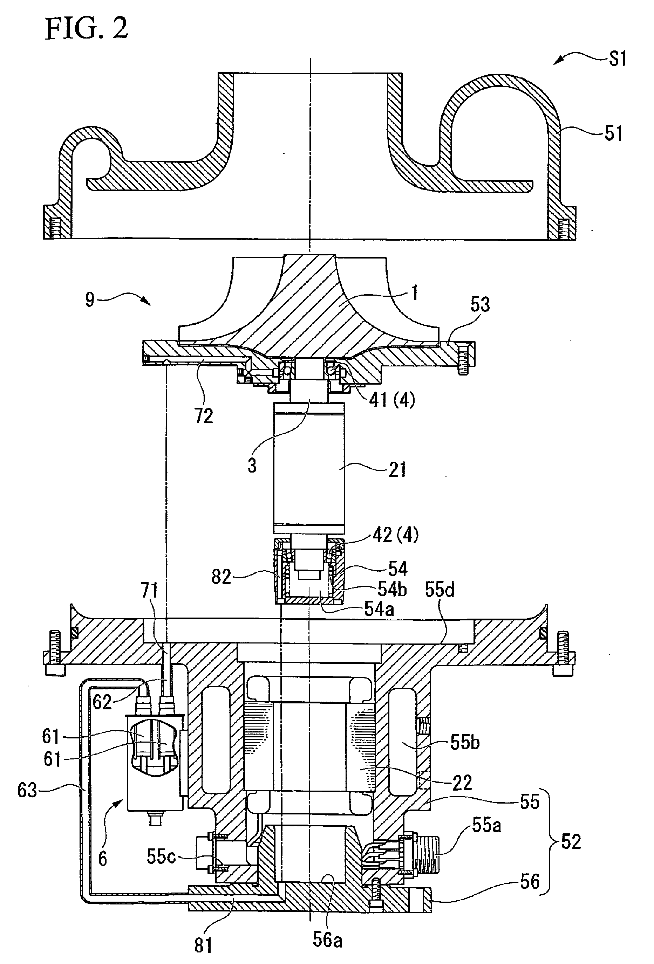

Next, an exploded configuration of the turbo blower S1 will be described in more detail. FIG. 2 is an exploded cross-section view showing a schematic configuration of the turbo blower S1 according to this embodiment.

As described above, the upper bearing supporting member 53 and the lower bearing supporting member 54 are detachably installed in the casing body 52. In addition, as shown in FIG. 2, the impeller 1, the rotor 21 and the rotary shaft 3 are integrally fixed to one another, and the rotary shaft 3 is rotatably supported by the upper bearing supporting member 53 and the lower bearing supporting member 54 via the upper bearing 41 and the lower bearing 42. Therefore, the impeller 1, the rotor 21, the rotary shaft 3, the upper bearing 41, the lower bearing 42, the upper bearing supporting member 53 and the lower bearing supporting member 54 are integrally assembled and configured as a module 9. That is, in this embodiment, the upper bearing supporting member 53, the lower bearing supporting member 54, the impeller 1 and the rotor 21 are attached to the rotary shaft 3, and in this state they can be attached to and detached from the casing body 52.
For example, at the time of the maintenance of the turbo blower S1, simply by separating the scroll casing 51 from the casing body 52 and detaching a fastening bolt or the like by which the upper bearing supporting member 53 is fixed to the casing body 52, it is possible to separate the module 9 from the casing body 52. That is, the module 9 is detachably installed to the casing body 52.

In addition, the directions in which the upper bearing supporting member 53 and the lower bearing supporting member 54 are attached to and detached from the casing body 52 are the same as the vertical direction. Therefore, the direction in which the module 9 is attached to and detached from the casing body 52 is the same as the vertical direction.

The direction in which the first upper flow path 71 communicates with the second upper flow path 72 is the same as the vertical direction. Therefore, the direction in which the first upper flow path 71 communicates with the second upper flow path 72 is the same as the direction in which the upper bearing supporting member 53 is attached to and detached from the casing body 52. As a result, simply by installing the upper bearing supporting member 53 in the casing body 52, the first upper flow path 71 communicates with the second upper flow path 72, and the upper grease flow path 7 is formed. In addition, a positioning member (not shown) or the like, which is for positioning the first upper flow path 71 and the second upper flow path 72 in a position in which these two flow paths communicate with each other, may be provided between the casing body 52 and the upper bearing supporting member 53.

The direction in which the first lower flow path 81 communicates with the second lower flow path 82 is the same as the vertical direction. Therefore, the direction in which the first lower flow path 81 communicates with the second lower flow path 82 is the same as the direction in which the lower bearing supporting member 54 is attached to and detached from the casing body 52. As a result, simply by installing the lower bearing supporting member 54 in the casing body 52, the first lower flow path 81 communicates with the second lower flow path 82, and the lower grease flow path 8 is formed.

In addition, a seal member (not shown) which is provided to enclose the place in which the first upper flow path 71 communicates with the second upper flow path 72, and sandwiched between the upper bearing supporting member 53 and the motor casing 55, may be disposed. Similarly, a seal member (not shown) which is provided to enclose the place in which the first lower flow path 81 communicates with the second lower flow path 82, and sandwiched between the lower bearing supporting member 54 and the base plate 56, may be disposed. Therefore, by disposing the above-described seal members, it is possible to prevent leakage of grease in the communication places.

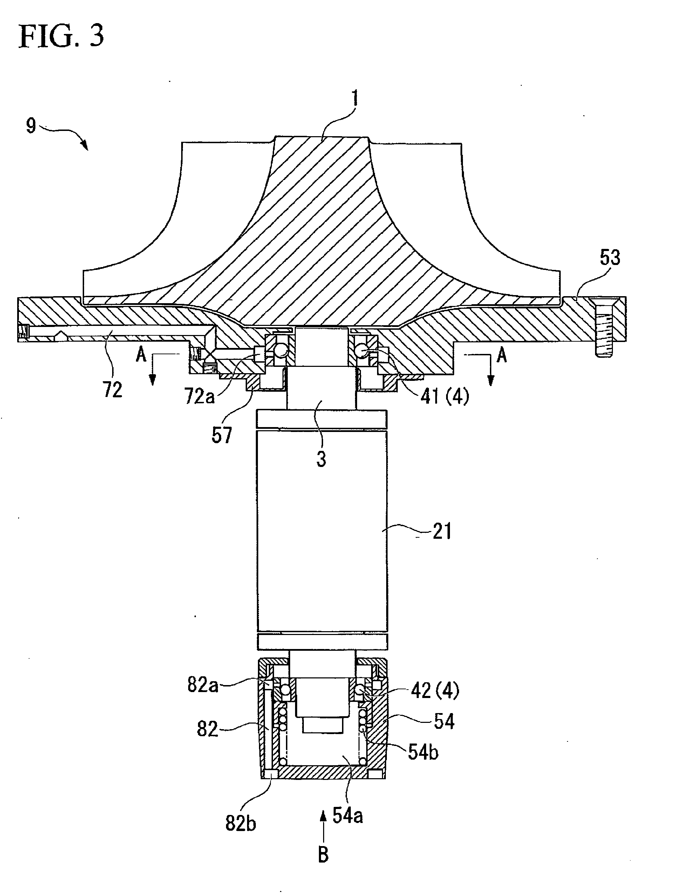

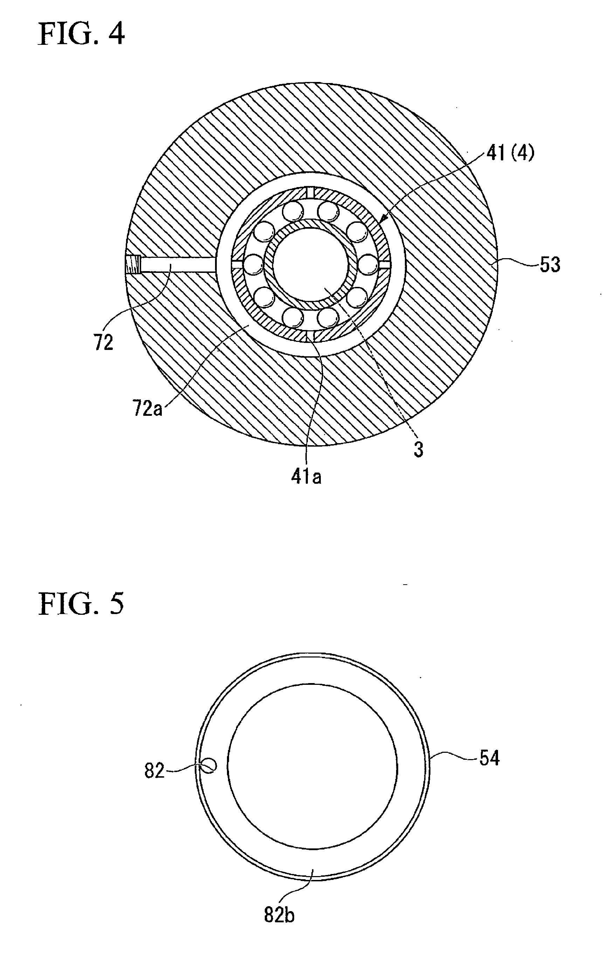

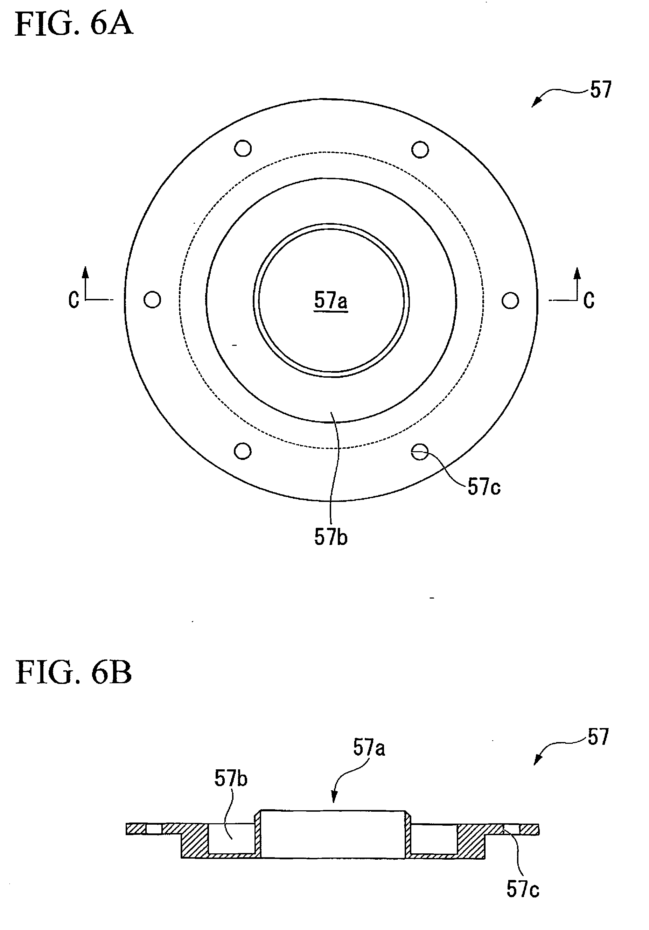

Subsequently, in this embodiment, the module 9 will be described in more detail. FIG. 3 is an enlarged cross-section view showing the module 9 in FIG. 2, FIG. 4 is a cross-section view taken along the line A-A of FIG. 3, FIG. 5 is a view as viewed from the arrow B of FIG. 3, FIG. 6A is a plan view showing the grease receiving saucer 57 according to this embodiment, and FIG. 6B is a cross-section view taken along the line C-C of FIG. 6A.

As shown in FIG. 3, an outer circumferential flow path 72a of the upper bearing 41 is formed in the member which composes the upper bearing supporting member 53, and the outer circumferential flow path 72a of the upper bearing 41 forms a portion of the second upper flow path 72 and is provided at the outer circumference side of the upper bearing 41. As shown in FIG. 4, the outer circumferential flow path 72a of the upper bearing 41 is circularly formed so as to enclose the upper bearing 41. Therefore, grease supplied through the second upper flow path 72 is supplied over an entire circumference of the outside in the radial direction of the upper bearing 41. In addition, a plurality of through-holes 41 a, which passes through toward the radial direction, is formed in the outer race of the upper bearing 41. Therefore, grease in the outer circumferential flow path 72a of the upper bearing 41 is supplied to the inside (between the outer race and the inner race) of the upper bearing 41 via the plurality of through-holes 41a, and it is possible to maintain smooth rotation of the rolling element (ball).

On the other hand, as shown in FIG. 3, an outer circumferential flow path 82a of the lower bearing 42 is formed in the member which composes the lower bearing supporting member 54, and the outer circumferential flow path 82a of the lower bearing 42 forms a portion of the second lower flow path 82 and is provided at the outer circumference side of the lower bearing 42. Since the configurations of the outer circumferential flow path 82a of the lower bearing 42 and the lower bearing 42 are the same as the configurations of the outer circumferential flow path 72a of the upper bearing 41 and the upper bearing 41, descriptions thereof are omitted.
Since grease is supplied to the upper bearing 41 and the lower bearing 42, it is possible to maintain smooth rotation of the rotary shaft 3.

In addition, the lower bearing supporting member 54 is provided with a circular flow path 82b which forms a portion of the second lower flow path 82 and is circularly provided around the rotational axis of the rotary shaft 3. As shown in FIG. 5, the circular flow path 82b is a groove-shaped flow path which is provided on a lower surface of the lower bearing supporting member 54. The circular flow path 82b is formed at a position which is opposite to the opening of the first lower flow path 81 at the recess 56a (see FIGS. 1 and 2). Further, since the circular flow path 82b is formed around the rotational axis of the rotary shaft 3, it is possible to secure the communication between the first lower flow path 81 and the second lower flow path 82 even when the lower bearing supporting member 54 is positioned in any direction while rotating around the rotational axis.

Referring to FIG. 3, the upper bearing supporting member 53 includes the grease receiving saucer 57 (a grease storing portion). The grease receiving saucer 57 stores the grease discharged from the upper bearing 41. As shown FIGS. 6A and 6B, the grease receiving saucer 57 is formed as a disk-shaped member. An opening 57a for passing through the rotary shaft 3 is formed in a center portion of the grease receiving saucer 57.
A storing portion 57b in which the grease discharged from the upper bearing 41 is stored is formed in the periphery of the opening 57a. The storing portion 57b is circularly formed so as to enclose the opening 57a.
A plurality of through-holes 57c, which passes through in the thickness direction of the plate of the grease receiving saucer 57, is formed in the vicinity of the circumferential portion of the grease receiving saucer 57. The plurality of through-holes 57c is holes which are employed so as to detachably install the grease receiving saucer 57 to the upper bearing supporting member 53 by the fastening bolt or the like.

In addition, referring to FIG. 3, a space 54a of the lower bearing supporting member 54 is a storing portion for storing the grease discharged from the lower bearing 42.

Subsequently, an operation of the turbo blower S1 according to this embodiment will be described.
In order to pump gas by rotating the impeller 1, the motor 2 rotates the rotary shaft 3 at high speed (for example, several tens of thousands of rpm). Therefore, the upper bearing 41 and the lower bearing 42 are rotated at high speed, and the grease supplied to the bearings is agitated. Further, due to a flow loss in the impeller 1 or the operation of the motor 2, heat is generated. The heat is transmitted to the upper bearing 41 and the lower bearing 42, and the temperature of the grease supplied to the bearings is increased.
Due to influences of the agitation or heat by the rotation, there is a possibility that grease is changed in properties and deteriorated and lubricant oil serving as oil base is depleted. If lubricant oil of the grease is depleted, there is a possibility that seizure of the upper bearing 41 and the lower bearing 42 occurs.

However, in the turbo blower S1 according to this embodiment, the grease supply device 6 is provided, and the upper grease flow path 7 and the lower grease flow path 8 are formed so as to supply grease to the upper bearing 41 and the lower bearing 42. Therefore, a constant amount of grease can be supplied to the upper bearing 41 and the lower bearing 42 at regular intervals, and smooth rotation of the upper bearing 41 and the lower bearing 42 can be maintained while preventing disadvantages such as seizure.

In addition, at the time of manufacture or maintenance of the turbo blower S1, an assembly operation is performed in which the impeller 1, the motor 2, the rotary shaft 3, the upper bearing 41, the lower bearing 42, the casing, or the like are assembled. At this time, when the supply tube, or the like for supplying grease to the upper bearing 41 and the lower bearing 42 is provided in the casing 5, an operation for disposing and connecting the supply tube is needed, and there is a possibility that assembly labor of the turbo blower S1 is increased. However, according to this embodiment, the upper grease flow path 7 and the lower grease flow path 8 for supplying grease to the upper bearing 41 and the lower bearing 42 are formed in the member which composes the casing 5. Therefore, in the assembly operation of the turbo blower S1, a certain amount of grease is filled in the upper grease flow path 7 and the lower grease flow path 8 which are formed in the casing 5, the rotary shaft 3, the upper bearing 41, the lower bearing 42, or the like are sequentially installed to the casing 5, and the assembly operation of the turbo blower S1 is completed. That is, an operation for disposing and connecting the supply tube, which is needed in the related art, is not necessary. As a result, assembly labor at the time of manufacture or maintenance of the turbo blower S1 can be reduced.

In addition, since both the upper bearing supporting member 53 and the lower bearing supporting member 54 are elements for configuring the module 9, the upper grease flow path 7 and the lower grease flow path 8 are formed by installing the module 9 in the casing body 52.

Moreover, the direction in which the first upper flow path 71 communicates with the second upper flow path 72 is the same as the direction in which the upper bearing supporting member 53 is attached to and detached from the casing body 52. Therefore, simply by installing the upper bearing supporting member 53 to the casing body 52, the first upper flow path 71 communicates with the second upper flow path 72, and the upper grease flow path 7 is formed. Further, when the seal member, which is provided to enclose the communication place of the first upper flow path 71 and the second upper flow path 72, is disposed, by installing the upper bearing supporting member 53 in the motor casing 55 of the casing body 52, the seal member is sandwiched between the upper bearing supporting member 53 and the motor casing 55. Therefore, through the seal member, the communication place of the first upper flow path 71 and the second upper flow path 72 can be appropriately sealed, and it is possible to prevent leakage of grease in the communication place.

In addition, the direction in which the first lower flow path 81 communicates with the second lower flow path 82 is the same as the direction in which the lower bearing supporting member 54 is attached to and detached from the casing body 52. Therefore, simply by installing the lower bearing supporting member 54 to the casing body 52, the first lower flow path 81 communicates with the second lower flow path 82, and the lower grease flow path 8 is formed. Further, when the seal member, which is provided to enclose the communication place of the first lower flow path 81 and the second lower flow path 82, is disposed, by installing the lower bearing supporting member 54 in the base plate 56 of the casing body 52, the seal member is sandwiched between the lower bearing supporting member 54 and the base plate 56. Therefore, through the seal member, the communication place of the first lower flow path 81 and the second lower flow path 82 can be appropriately sealed, and it is possible to prevent leakage of grease in the communication place.

Here, an operation at the time of assembly and maintenance of the turbo blower S1 will be described.
At the time of assembly of the turbo blower S1, first, the module 9 is assembled from the impeller 1, the rotor 21, the rotary shaft 3, the upper bearing 41, the lower bearing 42, the upper bearing supporting member 53 and the lower bearing supporting member 54. Further, both of the second upper flow path 72 of the upper bearing supporting member 53 and the second lower flow path 82 of the lower bearing supporting member 54 are filled with grease.
In addition, the casing body 52 is assembled from the motor casing 55 and the base plate 56, and the stator 22, or the like is attached to the casing body 52. Both of the first upper flow path 71 and the first lower flow path 81 formed in the casing body 52 are filled with grease.
Next, the module 9 is attached to the casing body 52. By simply attaching the module 9 to the inside of the casing body 52, the upper grease flow path 7 is formed from the first upper flow path 71 and the second upper flow path 72, and the lower grease flow path 8 is formed from the first lower flow path S1 and the second lower flow path 82. That is, the upper bearing supporting member 53, the impeller 1 and the rotor 21 are attached to the rotary shaft 3, and in this state the upper grease flow path 7 can be assembled. Further, the lower bearing supporting member 54, the impeller 1 and the rotor 21 are attached to the rotary shaft 3, and in this state the lower grease flow path 8 can be assembled. By simply fixing the upper bearing supporting member 53 to the casing body 52 by using the fastening bolt or the like, the operation for attaching the module 9 to the casing body 52 is completed.
Finally, the scroll casing 51 is attached to the casing body 52. As described above, the assembly operation of the turbo blower S1 is completed.
According to this embodiment, the operation for disposing the supply tube of grease, or the like, which is needed in the related art, is not necessary. Therefore, the turbo blower S1 can be easily assembled, and working property of the assembly can be improved.

At the time of maintenance of the turbo blower S1, first, the fastening bolt, or the like which fixes the upper bearing supporting member 53 and the casing body 52 is detached, and the module 9 is taken out from the casing body 52. By simply taking out the module 9 from the casing body 52, the upper grease path way 7 is disassembled into the first upper flow path 71 and the second upper flow path 72, and the lower grease flow path 8 is disassembled into the first lower flow path 81 and the second lower flow path 82. That is, the upper bearing supporting member 53, the impeller 1 and the rotor 21 are attached to the rotary shaft 3, and in this state the upper grease flow path 7 can be disassembled. Further, the lower bearing supporting member 54, the impeller 1 and the rotor 21 are attached to the rotary shaft, and in this state the lower grease flow path 8 can be assembled.
After the maintenance of the turbo blower S1 is performed (the removal of the discharged grease, or the like), by again attaching the module 9 to the casing body 52, the maintenance of the turbo blower S1 is completed.
According to this embodiment, the operation for attaching and detaching the supply tube of the grease, or the like, which is needed in the related art, is not necessary. Therefore, the maintenance of the turbo blower S1 can be easily performed, and working property of the maintenance can be improved.

In addition, at the maintenance of the turbo blower S1, after the module 9 is taken out from the casing body 52, another module 9 other than the module 9 taken out may be attached to the casing body 52. Before a start of the maintenance of the turbo blower S1, assembling of another module 9 and filling of grease to the second upper flow path 72 and the second lower flow path 82 are completed. By replacing the module 9 taken out with another module 9, without waiting for completion of the maintenance of the module 9 taken out, the turbo blower S 1 can be assembled again by using another module 9. Therefore, the stop period of the turbo blower S1 for maintenance can be shortened, and the operation of the turbo blower S 1 can be immediately resumed.

In addition, the circular flow path 82b is formed in the member which composes the lower bearing supporting member 54.
In a state where the scroll casing 51 is separated from the casing body 52, the installation position or the posture of the upper bearing supporting member 53 can be identified from the outside. Further, a positioning member for aligning the position between the upper bearing supporting member 53 and the casing body 52 (a motor casing 55) is used in some cases. Therefore, communication of the first upper flow path 71 with the second upper flow path 72 is easily performed. On the other hand, since the lower bearing supporting member 54 is disposed in the casing body 52, it is difficult to identify the posture of the lower bearing supporting member 54 from the outside.
In this embodiment, since the circular flow path 82b is formed, the communication of the first lower flow path 81 and the second lower flow path 82 can be secured even though the lower bearing supporting member 54 is disposed in any direction where the lower bearing supporting member 54 is rotated around the rotational axis of the rotary shaft 3. Therefore, the labor for communicating the first lower flow path 81 and the second lower flow path 82 can be reduced.

In addition, the grease receiving saucer 57 is provided at the upper bearing supporting member 53, and the space 54a is formed in the lower bearing supporting member 54.
Both of the grease receiving saucer 57 and the space 54a are employed as the storing portion for storing the discharged grease. Therefore, contamination of the inside of the casing 5 by the discharged grease can be prevented. Further, the grease receiving saucer 57 is provided at the upper bearing supporting member 53, and the space 54a is formed in the inside of the lower bearing supporting member 54. Therefore, the module 9 is separated from the casing body 52 at the time of maintenance of the turbo blower S1, and it is possible to remove and clean the grease stored in the grease receiving saucer 57 and the space 54a.

Therefore, according to this embodiment, in the assembly operation of the turbo blower S1, the operation of disposing and connecting the supply tube for supplying grease is not needed in the casing 5. For this reason, according to this embodiment, the assembly labor can be reduced at the time of manufacture or maintenance of the turbo blower S1.

### [Second Embodiment]

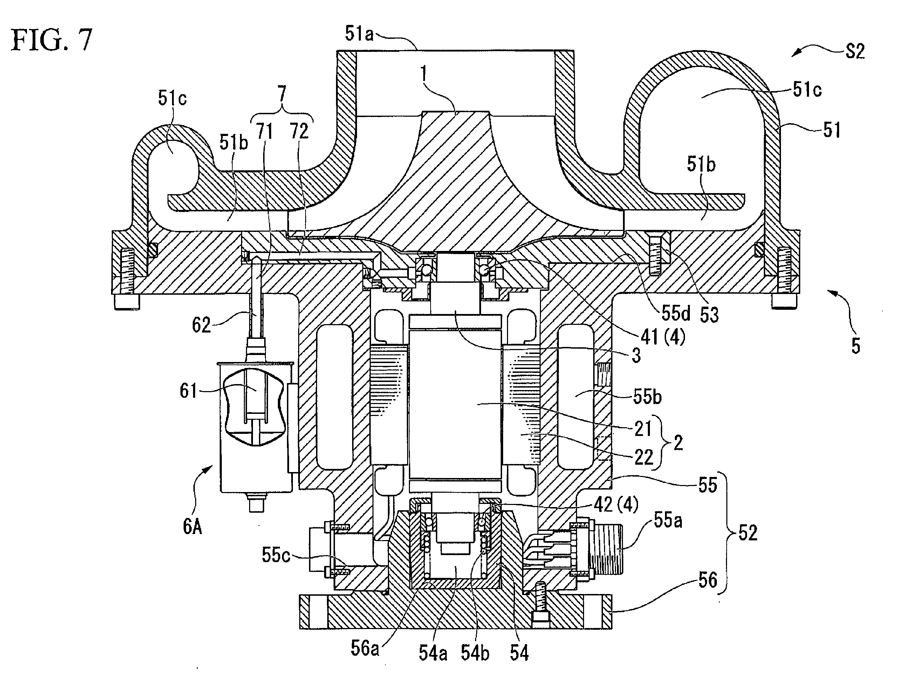

FIG. 7 is a cross-section view showing a schematic configuration of the turbo blower S2 according to a second embodiment of the present invention. In addition, in FIG. 7, the same components as those of the first embodiment described in FIG. 1 are denoted by the same reference numbers, and descriptions thereof are omitted.

In the casing 5 of the turbo blower S2, the upper grease flow path 7 is formed for supplying grease to the upper bearing 41. On the other hand, a grease flow path for supplying grease to the lower bearing 42 is not formed. Grease is supplied to the lower bearing 42 only at the time of manufacture and maintenance of the turbo blower S2, and the grease is not supplied to the lower bearing 42 during the use of the turbo blower S2.
In addition, in this embodiment, the syringe 61 provided in the grease supply device 6A is single.

Heat generated due to the operation of the motor 2 is transmitted to both the upper bearing 41 and the lower bearing 42. On the other hand, heat generated due to the flow loss of gas in the impeller 1 is transmitted to the upper bearing 41 provided at the vicinity of the impeller 1, but the heat is not transmitted in a positive manner to the lower bearing 42 provided at the end portion opposite to the impeller 1 of the rotary shaft 3. Therefore, the temperature of the lower bearing 42 is lower than that of the upper bearing 41.
Due to temperature difference between the upper bearing 41 and the lower bearing 42, consumption of the grease supplied to the lower bearing 42 is more suppressed than that supplied to the upper bearing 41. Therefore, according to the operation conditions (for example, the number of rotations of the rotary shaft 3) of the turbo blower S2, simply by supplying grease initially, there is a possibility that it will not be necessary to supply grease to the lower bearing 42 during use.

According to this embodiment, since it is not necessary to supply grease to the lower bearing 42 during use based on the above-described knowledge, the grease flow path or the grease supply device for supplying grease to the lower bearing 42 can be omitted. Therefore, the costs of the turbo blower S2 can be reduced.

While preferred embodiments of the present invention have been described and illustrated above, it should be understood that these are exemplary of the present invention and are not to be considered as limiting. Additions, omissions, substitutions and other modifications can be made without departing from the spirit or scope of the present invention. Accordingly, the present invention is not to be considered as being limited by the foregoing description, and is only limited by the scope of the appended claims.

## Claims

1. A turbo machine (S1) comprising:
an impeller (1) that rotates to make gas flow;
a driving device (2) that rotationally drives the impeller (1);
a rotary shaft (3) that transmits a rotational driving force of the driving device (2) to the impeller (1);
a bearing (4) that rotatably supports the rotary shaft (3); and
a casing (5) that houses at least the driving device (2) and the rotary shaft (3),
wherein the casing (5) is provided with a grease flow path (7,8) to supply grease to the bearing (4) for lubricating the bearing (4),
the casing (5) includes a casing body (2) that houses at least the driving device (2) and the rotary shaft (3), and a bearing supporting member (53, 54) that is detachably installed in the casing body (2) and supports the bearing (4),
the casing body (2) is provided with a first flow path (71, 81) that forms a portion of the grease flow path (7), and **characterized in that**
the bearing supporting member (53, 54) is provided with a second flow path (72, 82) that forms a portion of the grease flow path (7) and communicates with the first flow path (71, 81).

2. The turbo machine (S1) according to Claim 1,
wherein a direction in which the first flow path (71, 81) and the second flow path (72, 82) communicate with each other is the same as a direction in which the bearing supporting member (53, 54) is attached and detached.

3. The turbo machine (S1) according to Claim 1 or 2,
wherein the bearing supporting member (53, 54) is provided with a circular flow path that is circularly disposed around the rotational axis of the rotary shaft (3), and
the circular flow path forms a portion of the second flow path (72, 82) and is disposed so as to communicate with the first flow path (71, 81).

4. The turbo machine (S1) according to Claim 1, 2 or 3,
wherein the bearing supporting member (53, 54) includes a grease storing portion for storing grease which is discharged from the bearing (4).

## Patentansprüche

1. Turbomaschine (S1), die aufweist:
ein Laufrad (1), das sich dreht, um einen Gasstrom zu erzeugen;
eine Antriebsvorrichtung (2), die rotierend das Laufrad (1) antreibt;
eine rotierende Welle (3), die eine rotierende Antriebskraft der Antriebsvorrichtung (2) auf das Laufrad (1) überträgt;
ein Lager (4), das rotierend die rotierende Welle (3) trägt; und
ein Gehäuse (5), das mindestens die Antriebsvorrichtung (2) und die rotierende Welle (3) aufnimmt,
wobei das Gehäuse (5) mit einem Fettströmungsweg (7, 8) versehen ist, um Fett dem Lager (4) für das Schmieren des Lagers (4) zuzuführen,
wobei das Gehäuse (5) einen Gehäusekörper (2), der mindestens die Antriebsvorrichtung (2) und die rotierende Welle (3) aufnimmt, und ein Lageraufnahmeelement (53, 54) umfasst, das lösbar im Gehäusekörper (2) installiert ist und das Lager (4) trägt,
wobei der Gehäusekörper (2) mit einem ersten Strömungsweg (71, 81) versehen ist, der einen Abschnitt des Fettströmungsweges (7) bildet, und **dadurch gekennzeichnet, dass**
das Lageraufnahmeelement (53, 54) mit einem zweiten Strömungsweg (72, 82) versehen ist, der einen Abschnitt des Fettströmungsweges (7) bildet und mit dem ersten Strömungsweg (71, 81) in Verbindung steht.

2. Turbomaschine (S1) nach Anspruch 1,
bei der eine Richtung, in der der erste Strömungsweg (71, 81) und der zweite Strömungsweg (72, 82) miteinander in Verbindung sind, die gleiche ist wie eine Richtung, in der das Lageraufnahmeelement (53, 54) befestigt und abgenommen wird.

3. Turbomaschine (S1) nach Anspruch 1 oder 2,
bei der das Lageraufnahmeelement (53, 54) mit einem kreisförmigen Strömungsweg versehen ist, der kreisförmig um die Rotationsachse der rotierenden Welle (3) herum angeordnet ist, und
der kreisförmige Strömungsweg einen Abschnitt des zweiten Strömungsweges (72, 82) bildet und so angeordnet ist, dass er mit dem ersten Strömungsweg (71, 81) in Verbindung steht.

4. Turbomaschine (S1) nach Anspruch 1, 2 oder 3,
bei der das Lageraufnahmeelement (53, 54) einen Fettlagerabschnitt für das Lagern von Fett umfasst, das vom Lager (4) abgegeben wird.

## Revendications

1. Turbomachine (S1), comprenant :
une roue (1) qui tourne pour entraîner un écoulement de gaz ;
un dispositif d'entraînement (2), entraînant la roue (1) en rotation ;
un arbre de rotation (3), transmettant une force d'entraînement rotative du dispositif d'entraînement (2) vers la roue (1) ;
un palier (4), supportant de manière rotative l'arbre de rotation (3) ; et
un carter (5), recevant au moins le dispositif d'entraînement (2) et l'arbre de rotation (3) ;
dans laquelle le carter (5) comporte une trajectoire d'écoulement de graisse (7, 8), pour amener de la graisse vers le palier (4) afin de lubrifier le palier (4) ;
le carter (5) englobant un corps de carter (2), recevant au moins le dispositif d'entraînement (2) et l'arbre de rotation (3), et un élément de support du palier (53, 54), installé de manière détachable dans le corps du carter (2) et supportant le palier (4) ;
le corps du carter (2) comportant ne première trajectoire d'écoulement (71, 81), formant une partie de la trajectoire d'écoulement de la graisse (7) ; et **caractérisée en ce que**
l'élément de support du palier (53, 54) comporte une deuxième trajectoire d'écoulement (72, 82), formant une partie de la trajectoire d'écoulement de la graisse (7) et communiquant avec la première trajectoire d'écoulement (71, 81).

2. Turbomachine (S1) selon la revendication 1,
dans laquelle une direction dans laquelle la première trajectoire d'écoulement (71, 81) et la deuxième trajectoire d'écoulement (72, 82) communiquent l'une avec l'autre est une direction identique à celle dans laquelle l'élément de support du palier (53, 54) est fixé et détaché.

3. Turbomachine (S1) selon les revendications 1 ou 2,
dans laquelle l'élément de support du palier (53, 54) comporte une trajectoire d'écoulement circulaire, agencée de manière circulaire autour de l'axe de rotation de l'arbre de rotation (3) ; et
la trajectoire d'écoulement circulaire formant une partie de la deuxième trajectoire d'écoulement (72, 82) et étant agencée de sorte à communiquer avec la première trajectoire d'écoulement (71, 81).

4. Turbomachine (SI) selon les revendications 1, 2 ou 3,
dans laquelle l'élément de support du palier (53, 54) englobe une partie de stockage de la graisse, pour stocker la graisse déchargée du palier (4).
